# EUROPEAN PATENT SPECIFICATION

(11) **EP 2 536 218 B1**
(45) Date of publication and mention of the grant of the patent: **08.04.2015**
(21) Application number: 12749414.4
(22) Date of filing: 14.02.2012
(51) Int. Cl.: H04W 24/10, H04W 48/20

(54) **METHOD AND DEVICE FOR REPORTING MEASUREMENT DATA**
VERFAHREN UND VORRICHTUNG FÜR DEN BERICHT VON MESSDATEN
PROCÉDÉ ET DISPOSITIF DE RAPPORT DE DONNÉES DE MESURE

(30) Priority: 25.02.2011 CN 201110046617
(43) Date of publication of application: 19.12.2012
(73) Proprietor: Huawei Technologies Co., Ltd., Longgang District Shenzhen, Guangdong 518129 (CN)
(72) Inventor: YU, Yongjun, Shenzhen Guangdong 518129 (CN); WANG, Jiyong, Shenzhen Guangdong 518129 (CN); FANG, Ming, Shenzhen Guangdong 518129 (CN)
(74) Representative: Kreuz, Georg Maria
(86) International application number: PCT/CN2012/071105
(87) International publication number: WO 2012/113296

(56) References cited:
- WO-A1-2009/021009
- WO-A1-2009/130558
- CN-A- 101 594 632
- RENESAS ELECTRONICS EUROPE ET AL: "Corrections to measurement reporting of inter-RAT cells", 3GPP DRAFT; GP-110177, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Chengdu; 20110304, 23 February 2011 (2011-02-23), XP050486417, [retrieved on 2011-02-23]
- LG ELECTRONICS INC: "The usage of XXX_REPORTING_OFFSET", 3GPP DRAFT; GP-100161 THE USAGE OF XXX_REPORTING_OFFSET, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Berlin; 20100301, 24 February 2010 (2010-02-24), XP050416601, [retrieved on 2010-02-24]
- HUAWEI TECHNOLOGIES CO ET AL: "Discussion on Multi-RAT reporting", 3GPP DRAFT; GP-110153 DISCUSSION ON MULTI-RAT REPORTING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Chengdu; 20110304, 23 February 2011 (2011-02-23), XP050486406, [retrieved on 2011-02-23]
- HUAWEI TECHNOLOGIES CO ET AL: "Discussion on Measurement Reporting Threshold", 3GPP DRAFT; GP-110626 DISCUSSION ON MEASUREMENT REPORTING THRESHOLD, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Dallas; 20110516, 11 May 2011 (2011-05-11), XP050487100, [retrieved on 2011-05-11]
- RENESAS ELECTRONICS EUROPE ET AL: "Corrections to measurement reporting of inter-RAT cells", 3GPP DRAFT; GP-110472, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Chengdu; 20110304, 3 March 2011 (2011-03-03), XP050486694, [retrieved on 2011-03-03]
- RESEARCH IN MOTION UK LTD: "Corrections to cell reporting requirements for multi-RAT MS", 3GPP DRAFT; GP-110476-WAS-110253 CR45008-REL8 REPORTING REQUIREMENTS FOR MULTI-RAT MS-REV2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Chengdu; 20110304, 3 March 2011 (2011-03-03), XP050486697, [retrieved on 2011-03-03]
- LG ELECTRONICS INC.: 'The usage of XXX_REPORTING_OFFSET' 3GPP TSG-GERAN#45 GP-100161, [Online] 01 March 2010 - 05 March 2010, XP050416601 Retrieved from the Internet: <URL:http://www.3gpp.org/ftp/tsg_geran/TSG GERAN/GER_45 Berlin/Docs/GP-1001>

## Description

### FIELD OF THE INVENTION

The present invention relates to the field of mobile communications, and in particular, to a method and a device for reporting measurement data.

### BACKGROUND OF THE INVENTION

With the development of SAE (System Architecture Evolution, system architecture evolution)/LTE (Long Term Evolution, long term evolution) network technologies, the SAE/LTE network and 2G (2nd Generation, second generation) or 3G (3rd Generation, third generation) network coexist in a communications network. During a service, in order to perform handover, a terminal must constantly measure adjacent cells and report in time the adjacent cells that meet a measurement report criterion to an access network. The access network selects a target cell according to measurement reported values of the adjacent cells reported by the terminal.

In a dedicated mode, the terminal selects different types of measurement reports according to a control parameter Report_type (report type) delivered by the network side, for example, a common measurement report type MR (Measurement Report) and an enhanced measurement report type EMR (Enhanced Measurement Report). Two optional types are also available for measurement items reported in a measurement report: signal intensity and signal quality. The terminal decides, according to the control parameter delivered by the network, the measurement item to be reported. In addition, a common measurement report message reports measurement values of a maximum of only six adjacent cells.

For a terminal supporting multi-radio access technology Multi-RAT (Multi-Radio Access Technology), if adjacent cells of a UTRAN (Universal Terrestrial Radio Access Network, universal terrestrial radio access network) and an E-UTRAN (Evolved Universal Terrestrial Radio Access Network, evolved universal terrestrial radio access network) exist at the same time in a list of adjacent cells, the terminal needs to decide, according to a parameter XXX_MULTIRAT_REPORTING delivered by the network side, the maximum number of cells allowed to be reported in different access technologies. The measurement values of these reported cells must meet the measurement report criterion, that is, exceed a set threshold value. Here, XXX indicates different RATs/Modes, for example, UTRAN TDD (Time Division Duplex, time division duplex), UTRAN FDD (Frequency Division Duplex, frequency division duplex), E-UTRAN TDD, and E-UTRAN FDD.

The terminal decides, according to the control parameter XXX_MULTIRAT_REPORTING delivered by the network side, the number of adjacent cells allowed to be reported in different RATs/Modes. During reporting of an EMR, a respective offset XXX_REPORTING _OFFSET is added to a reported value (Reported value) of each adjacent cell, the obtained results are ranked by magnitude, and measurement reports of all the adjacent cells are reported in sequence. Here, the term "reported value" indicates a value mapped from an actual measurement value according to a preset mapping relationship. The measurement report includes this value, instead of the actual measurement value.

A maximum of only six adjacent cells can be reported in a common measurement report MR message; while in the current network coverage, multiple access technologies/modes such as UTRAN TDD, UTRAN FDD, E-UTRAN TDD, and E-UTRAN FDD may occur, and the maximum number of cells allowed to be reported by the parameter XXX_MULTIRAT_REPORTING is 3. Therefore, if adjacent cells that use more than two access technologies/modes exist, but the maximum number of cells allowed to be reported by the parameter XXX_MULTIRAT_REPORTING is 3, the number of cells that meet the criterion for reporting measurement reports among the adjacent cells that use multiple access technologies/modes will be larger than the number of cells allowed to be reported by the measurement reports. In this case, the terminal does not know which cells among the cells that meet the criterion should be reported.

Therefore, a method capable of effectively reporting measurement data is required.

Document D1 (RENESAS ELECTRONICS EUROPE ET AL: "Corrections to measurement reporting of inter-RAT cells", 3GPP DRAFT; GP-110177, 3RD GENERATION PARTNERSHIP PROJECT(3GPP), MOBILE COMPETENCE CENTRE; 650, ROUTE DES LUCIOLES; F-06921 SOPHIA-ANTIPOLIS CEDEX; FRANCE, vol. TSG GERAN, no. Chengdu; 20110304, 23 February 2011, XP050486417) discloses a method for reporting measurement data. Specially, for E-UTRAN XXX, 6 bit measurement reporting is used with a reported value equal or higher than E-UTRAN_XXX_REPORTING_THRESHOLD and with a non-reported value equal or higher than E-UTRAN_XXX_REPORTING_THRESHOLD 2 (XXX indicates radio access technology/mode). 3 bit measurement reporting is used with a reported value equal or higher than E-UTRAN_XXX_MEASUREMENT_REPORT_OFFSET and with a non-reported value equal or higher than E-UTRAN_XXX_REPORTING_THRESHOLD 2.

### SUMMARY OF THE INVENTION

The present invention provides a method and a device for reporting measurement data, so as to effectively report adjacent cells.

According to the first aspect of the present invention a method for reporting measurement data includes: mapping each of measurement values of adjacent cells that meet a reporting criterion to a first reported value in a 6-bit reported value mode; selecting, according to the first reported value, a cell allowed to be reported from the adjacent cells that meet the reporting criterion; mapping a measurement value of the cell allowed to be reported to a second reported value in a 3-bit reported value mode; and reporting the second reported value to a network.

According to the second aspect of the present invention a device for reporting measurement data includes: a first mapping unit, configured to map each of measurement values of adjacent cells that meet a reporting criterion to a first reported value in a 6-bit reported value mode; a selecting unit, configured to select, according to the first reported value, a cell allowed to be reported from the adjacent cells that meet the reporting criterion; a second mapping unit, configured to map a measurement value of the cell allowed to be reported to a second reported value in a 3-bit reported value mode; and a reporting unit, configured to report the second reported value to a network.

As such, in the present invention, the first reported values mapped in the 6-bit reported value mode may be used in ranking of the adjacent cells, and the second reported values mapped in the 3-bit reported value mode may be used in actual reporting of the adjacent cells, so as to effectively select the adjacent cells for reporting.

### BRIEF DESCRIPTION OF THE DRAWINGS

To illustrate the technical solutions of the present invention more clearly, the accompanying drawings for describing the embodiments are introduced briefly in the following.
FIG. 1 is a flowchart of an embodiment of a method for reporting measurement data according to the present invention;
FIG. 2 is a flowchart of an example of a method for reporting measurement data according to the present invention;
FIG. 3 is a schematic block diagram of an embodiment of a device for reporting measurement data according to the present invention; and
FIG. 4 is a schematic block diagram of an example of a device for reporting measurement data according to the present invention.

### DETAILED DESCRIPTION OF THE EMBODIMENTS

The technical solutions of the present invention will be clearly and fully described in the following with reference to the accompanying drawings. It is obvious that the embodiments to be described are only a part rather than all of the embodiments of the present invention.

According to an existing standard, for a UTRAN FDD cell, a reported measurement item is an RSCP (Received Signal Code Power, received signal code power) or Ec/Io (signal quality). If the measurement item is the RSCP, a mapping relationship between a reported value included in a measurement report and an actual measurement value is as follows:
0= RSCP < -115 dBm
1 = -115 dBm ≤ RSCP < -114 dBm
2 = -114 dBm ≤ RSCP < -113 dBm
62 = -54 dBm ≤ RSCP < -53 dBm
63 = -53 dBm ≤ RSCP

If the measurement item is the Ec/Io, a mapping relationship between a reported value included in a measurement report and an actual measurement value is as follows:
0 = Ec/Io < -23.5 dB
1 = -23.5 dB ≤ Ec/Io < -23 dB
2 = -23 dB ≤ Ec/Io < -22.5 dB
48 = -0.5 dB ≤ Ec/Io < 0 dB
49 = 0 dB ≤ Ec/Io

For a UTRAN TDD cell, the reported measurement item is the RSCP (signal intensity), and a corresponding relationship between a reported value included in a measurement report and an actual measurement value is as follows:
0 = RSCP < -115 dBm
1 = -115 dBm ≤ RSCP < -114 dBm
2 = -114 dBm ≤ RSCP < -113 dBm
62 = -54 dBm ≤ RSCP < -53 dBm
63 = -53 dBm ≤ RSCP

For an E-UTRAN cell, two scenarios that the measurement result is reported by using a 6-bit (bit) space and the measurement result is reported by using a 3-bit space exist. The measurement result may be reported only by using a method where the 3-bit space is used to indicate the measurement result in a common measurement report MR; while the measurement result may be reported only by using a method where the 6-bit is used to indicate the measurement result in an enhanced measurement report EMR. Regardless of whether the 3-bit or 6-bit reporting is used, the reported measurement item may be an RSRP (Reference Signal Received Power, reference signal received power) or RSRQ (Reference Signal Received Quality, reference signal received quality).

6-bit reported value mode: using the 6-bit space to indicate the measurement result

If the reported measurement item is the RSRP, a mapping relationship between a reported value included in a measurement report and an actual measurement value is as follows:

| | |
|---|---|
| RSRP | 0 = smaller than -140 dBm |
| RSRP | 1 = -140 dBm to -138 dBm |
| | ... ... |
| RSRP | 17 = -108 dBm to -106 dBm |
| RSRP | 18 = -106 dBm to-10 dBm |
| RSRP | 19 = -10 dBm to-104 dBm |
| | ... ... |
| RSRP | 44 = -80 dBm to -79 dBm |
| RSRP | 45 = -79 dBm to -78 dBm |
| RSRP | 46 = -78 dBm to -76 dBm |
| | ... ... |
| RSRP | 62 = -46 dBm to -44 dBm |
| RSRP | 63 = equal to or larger than -44 dBm |

If the reported measurement item is the RSRQ, a mapping relationship between a reported value included in a measurement report and an actual measurement value is as follows:

| | |
|---|---|
| RSRQ | 0= smaller than -19.5 dB |
| RSRQ | 1= -19.5 dB to -19 dB |
| RSRQ | 2= -19 dB to -18.5 dB |
| | ... ... |
| RSRQ | 33 = -3.5 dB to -3 dB |
| RSRQ | 34 = equal to or larger than -3 dB |

3-bit reported value mode: using the 3-bit space to indicate the measurement result

If the reported measurement item is the RSRP, a mapping relationship between a reported value included in a measurement report and an actual measurement value is as follows:

| | | |
|---|---|---|
| RSRP | 0 = Offset | to Offset + Step |
| RSRP | 1 = Offset + Step | to Offset + 2 × Step |
| RSRP | 2 = Offset + 2 × Step | to Offset + 3 × Step |
| RSRP | 3 = Offset + 3 × Step | to Offset + 4 × Step |
| RSRP | 4 = Offset + 4 × Step | to Offset + 5 × Step |
| RSRP | 5 = Offset + 5 × Step | to Offset + 6 × Step |
| RSRP | 6 = Offset + 6 × Step | to Offset + 7 × Step |
| RSRP | 7 = equal to or larger than Offset + 7 × Step | |

Here, Offset is a parameter E-UTRAN_FDD_MEASUREMENT_REPORT_OFFSET delivered by the network side, and Step is a parameter REPORTING_GRANULARITY delivered by the network side.

If the reported measurement item is the RSRQ, a mapping relationship between a reported value included in a measurement report and an actual measurement value is as follows:

| | | |
|---|---|---|
| RSRQ | 0 = Offset | to Offset + Step |
| RSRQ | 1 = Offset + Step | to Offset + 2 × Step |
| RSRQ | 2 = Offset + 2 × Step | to Offset + 3 × Step |
| RSRQ | 3 = Offset + 3 × Step | to Offset + 4 × Step |
| RSRQ | 4 = Offset + 4 × Step | to Offset + 5 × Step |
| RSRQ | 5 = Offset + 5 × Step | to Offset + 6 × Step |
| RSRQ | 6 = Offset + 6 × Step | to Offset + 7 × Step |
| RSRQ | 7 = equal to or larger than Offset + 7 × Step | |

Here, Offset is the parameter E-UTRAN_FDD_MEASUREMENT_REPORT_OFFSET delivered by the network side, and Step is the parameter REPORTING_GRANULARITY delivered by the network side.

The 3-bit space is used in the common measurement reports to report the measurement results of the E-UTRAN adjacent cells, and the reported values are in a range of 0 to 7; while the 6-bit space is used in the measurement reports of adjacent cells in other radio access technologies/modes (RATs/Modes) to report the measurement results, and the reported values are in a range of 0 to 63 (when the reported measurement item is the RSCP or RSRP) or in a range of 0 to 34 (when the reported measurement item is the Ec/Io) or in a range of 0 to 49 (when the reported measurement item is the RSRQ). The range of these reported values differs greatly from the range of the reported values of the E-UTRAN adjacent cells. Even if the method of adding an offset XXX_REPORTING_OFFSET to the reported values from the adjacent cells that meet the criterion for reporting measurement reports in the EMR is used, adjacent cells using multiple RATs/Modes that meet the criterion for reporting measurement reports can still not be effectively ranked. In the circumstance that the reporting space is limited, the terminal still fails to know which adjacent cells should be reported.

In an embodiment of the present invention, in ranking of E-UTRAN adjacent cells and adjacent cells using other RATs, first reported values mapped in the 6-bit reported value mode are used for the E-UTRAN adjacent cells, while second reported values mapped in the 3-bit reported value mode are used in actual reporting of the adjacent cells; and the first reported values mapped in the 6-bit reported value mode are used for the adjacent cells using other RATs, while the second reported values mapped in the 6-bit reported value mode are also used in actual reporting of the adjacent cells, so as to effectively rank the adjacent cells.

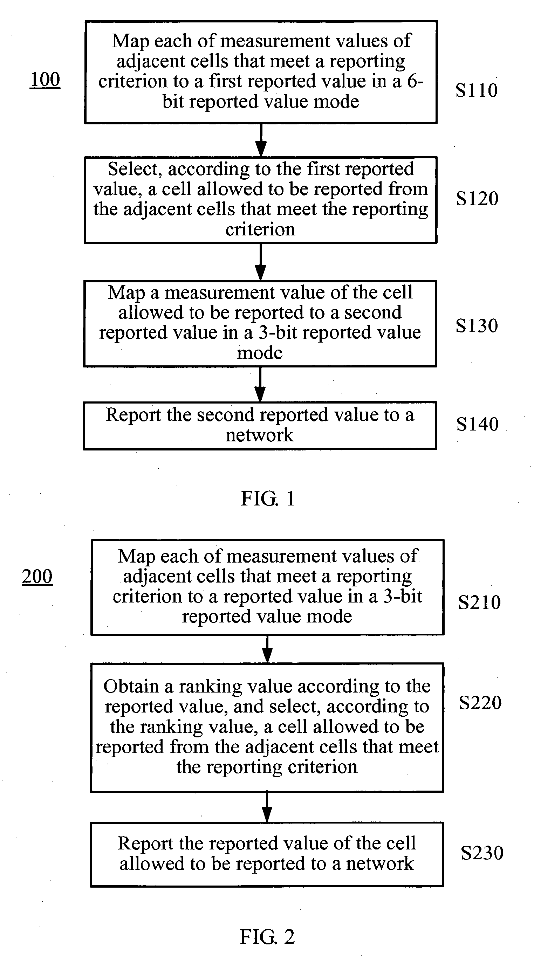

FIG. 1 is a flowchart of an embodiment of a method 100 for reporting measurement data according to the present invention. The method 100 may be executed by a mobile terminal that needs to report measurement data to a network, for example, the method may be applied to a scenario where measurement results of adjacent cells that use multiple radio access technologies/modes (RATs/Modes) need to be reported by using common measurement reports.

As shown in FIG. 1, in S110 of the method 100, each of measurement values of adjacent cells that meet a reporting criterion is mapped to a first reported value in a 6-bit reported value mode. Here, for example, meeting the reporting criterion means that the reported value or measurement value is equal to or larger than a threshold value set by the network, and that the number of cells that use different RATs/Modes among these cells is not larger than the value of a parameter XXX_MULTIRAT_REPORTING delivered by the network respectively. XXX indicates the different RATs/Modes, for example, UTRAN TDD, UTRAN FDD, E-UTRAN TDD, and E-UTRAN FDD.

S110 may be respectively executed for E-UTRAN adjacent cells and adjacent cells of other RATs. For the E-UTRAN adjacent cells, the first reported values are reported values obtained through mapping in the 6-bit reported value mode. As stated above, the first reported values range from 0 to 63 (when the reported measurement item is the RSRP) or from 0 to 34 (when the reported measurement item is the RSRQ). On the other hand, for the adjacent cells of other RATs (for example, UTRAN adjacent cells), the first reported values are also reported values obtained through mapping in the 6-bit reported value mode.

Then, in S120 of the method 100, a cell allowed to be reported is selected, according to the first reported value, from the adjacent cells that meet the reporting criterion.

According to an embodiment of the present invention, a corresponding offset XXX_REPORTING_OFFSET may be added to the first reported value to obtain a corresponding ranking value (Ranking Value), and ranking is performed according to the magnitude of the ranking value. The mobile terminal selects the cell allowed to be reported according to a descending order of the ranking value. The offset is delivered by the network side to the mobile terminal. The parameter XXX_REPORTING_OFFSET may be an existing parameter, or a newly introduced parameter. During ranking, the condition of other adjacent cells (for example, UTRAN adjacent cells) may be considered for ranking and selection. At this time, for the UTRAN adjacent cells, accordingly, the first reported values used to obtain the ranking values are actual reported values mapped in the 6-bit reported value mode, and are also 6-bit data. Here, the first reported values range from 0 to 63 (when the reported measurement item is the RSCP) or from 0 to 49 (when the reported measurement item is the Ec/Io).

According to another embodiment of the present invention, the first reported value may be deducted by a threshold value, where the threshold value is delivered by the network side to the mobile terminal. Then, the respective offset XXX_REPORTING_OFFSET is added to the first reported value to obtain the corresponding ranking value. Ranking is performed according to the magnitude of the ranking value. The mobile terminal selects a cell allowed to be reported according to a descending order of the ranking value. The offset is delivered by the network side to the mobile terminal. The parameter XXX_REPORTING_OFFSET may be an existing parameter, or a newly introduced parameter.

In S130 of the method 100, for the E-UTRAN adjacent cells, a measurement value of the cell allowed to be reported is mapped to a second reported value in a 3-bit reported value mode, and in S140, the second reported value is reported to the network. For adjacent cells using other RATs, the first reported values are reported to the network.

In other words, for the E-UTRAN adjacent cells, though the first reported values based on the 6-bit space are ranked in S120, during actual reporting, regardless of whether the measurement item is the RSRQ or RSRP in the measurement report, the used reported values are reported values (the second reported values) obtained through mapping in the 3-bit reported value mode, and range from 0 to 7.

Therefore, in the embodiment of the present invention, in ranking of adjacent cells, for E-UTRAN adjacent cells, the first reported values mapped in the 6-bit reported value mode are used; while the second reported values mapped in the 3-bit reported value mode are used in actual reporting of the adjacent cells. For adjacent cells using other RATs, the first reported values mapped in the 6-bit reported value mode are used; while the first reported values mapped in the 6-bit reported value mode are still used in reporting of the adjacent cells, so as to effectively select the adjacent cells for reporting.

The following describes a non-confining specific example of this embodiment.

An actual measurement value for the E-UTRAN TDD adjacent cell is RSRP = -101 dBm, and the value of a parameter E-UTRAN_FDD _MEASUREMENT_REPORT_OFFSET is 30. According to the definition in the existing standard, 30 indicates -110 dBm. The value of REPORTING_GRANULARITY is 1. According to the definition in the existing standard, 1 indicates 2 dBm. In the 3-bit reported value mode, the mapping relationship for the reported value is (-110 dBm) + 5 × 2 dBm < -101 dBm < (-110 dBm) + 6 × 2 dBm, and the reported value of the RSRP is 5. In the 6-bit reported value mode, the mapping relationship for the reported value is RSRP 23 = -101 dBm ≤ -101 dBm < -100 dBm, and the reported value of the RSRP is 23. If the offset delivered by the network side is XXX_REPORTING_OFFSET, the offset XXX_REPORTING_OFFSET is added to 23, the result is ranked and compared with the adjacent cells that meet the measurement report criterion in other access technologies/modes plus the offset XXX_REPORTING_OFFSET corresponding to the other access technologies/modes, and then the adjacent cells are selected in an order of the magnitude for reporting. If a cell needs to be reported, the value actually indicated in the measurement report is 5 instead of 23.

FIG. 2 is a flowchart of an example of a method for reporting measurement data 200 according to the present invention. The method 200 may be executed by a mobile terminal that needs to report measurement data to a network, for example, the method may be applied to a scenario where measurement results of adjacent cells that use multiple radio access technologies/modes (RATs/Modes) need to be reported by using common measurement reports.

As shown in FIG. 2, in S210 of the method 200, for E-UTRAN adjacent cells, measurement values of the adjacent cells that meet a reporting criterion are respectively mapped to reported values in a 3-bit reported value mode, and for adjacent cells using other RATs, measurement values of the adjacent cells that meet the reporting criterion are respectively mapped to reported values in a 6-bit reported value mode. For example, for each of the E-UTRAN adjacent cells, the reported value is an actual reported value obtained through mapping in the 3-bit reported value mode. As stated above, the reported value ranges from 0 to 7. For each of the adjacent cells using other RATs, the reported value is obtained through mapping in the 6-bit reported value mode, and ranges from 0 to 63 (when the reported measurement item is the RSCP) or from 0 to 49 (when the reported measurement item is the Ec/Io). For example, meeting the reporting criterion means that the reported value or measurement value is equal to or larger than a threshold value set by the network, and that the number of cells that use different RATs/Modes among these cells is not larger than the value of a parameter XXX_MULTIRAT_REPORTING delivered by the network respectively. XXX indicates the different RATs/Modes, for example, UTRAN TDD, UTRAN FDD, E-UTRAN TDD, and E-UTRAN FDD.

In S220, a ranking value is obtained according to the reported value, and a cell allowed to be reported is selected, according to the ranking value, from the adjacent cells that meet the reporting criterion. In S230, the reported value of the cell allowed to be reported is reported to the network.

During ranking and selection of the cell allowed to be reported, the condition of other adjacent cells (for example, UTRAN adjacent cells) may be considered for ranking and selection. At this time, for the UTRAN adjacent cells, the corresponding reported values are obtained by mapping the measurement values of the adjacent cells in the 6-bit reported value mode, and range from 0 to 63 (when the reported measurement item is the RSCP) or from 0 to 49 (when the reported measurement item is the Ec/Io).

According to an example of the present invention, for each of the E-UTRAN adjacent cells, the 3-bit reported value may be multiplied by a factor to obtain a product, and a ranking value used for ranking is obtained based on the product. For each of the adjacent cells using other RATs, a ranking value is obtained based on the 6-bit reported value (for example, a ranking value is obtained by adding a corresponding offset to the reported value), or a corresponding ranking value is obtained based on a result of deducting the 6-bit reported value by a threshold value (the threshold value is delivered by the network to the terminal), and ranking is performed according to the ranking value. The terminal selects a cell allowed to be reported according to a descending order of the ranking value.

Here, the used multiplication factor may be an integer. According to an example of the present invention, the value of the integer depends on a parameter REPORTING_GRANULARITY delivered by the network side. For example, when REPORTING_GRANULARITY is 0, the integer is 1; and when REPORTING_GRANULARITY is 1, the integer is 2.

According to an example of the present invention, a ranking value is obtained by adding a respective offset XXX_REPORTING_OFFSET to the product. The offset is delivered by the network, and may be an existing parameter or a newly introduced parameter. The result is ranked and compared with the adjacent cells that meet the measurement report criterion in other access technologies/modes plus the offset XXX_REPORTING_OFFSET corresponding to the other access technologies/modes, and then the adjacent cells are selected in an order of the magnitude for reporting. XXX in the parameter indicates the different access technologies, for example, UTRAN TDD, UTRAN FDD, E-UTRAN TDD, and E-UTRAN FDD.

According to another example of the present invention, a threshold value and a respective offset are added to the product to obtain a ranking value. The threshold value may depend on a parameter E-UTRAN_FDD_MEASUREMENT _REPORT_OFFSET delivered by the network side. For example, the threshold value may be an actual value of the parameter E-UTRAN_FDD_MEASUREMENT_REPORT_OFFSET, and ranges from 0 to 63. The threshold value may also be other values mapped from this parameter.

In this manner, according to the embodiment of the present invention, when the cells that meet the reporting criterion among the adjacent cells that use multiple access technologies/modes exceed the allowed space in the measurement report, the terminal is enabled to rank all the cells according to the method provided by this solution and selectively report the measurement reports of the cells that use different access technologies/modes.

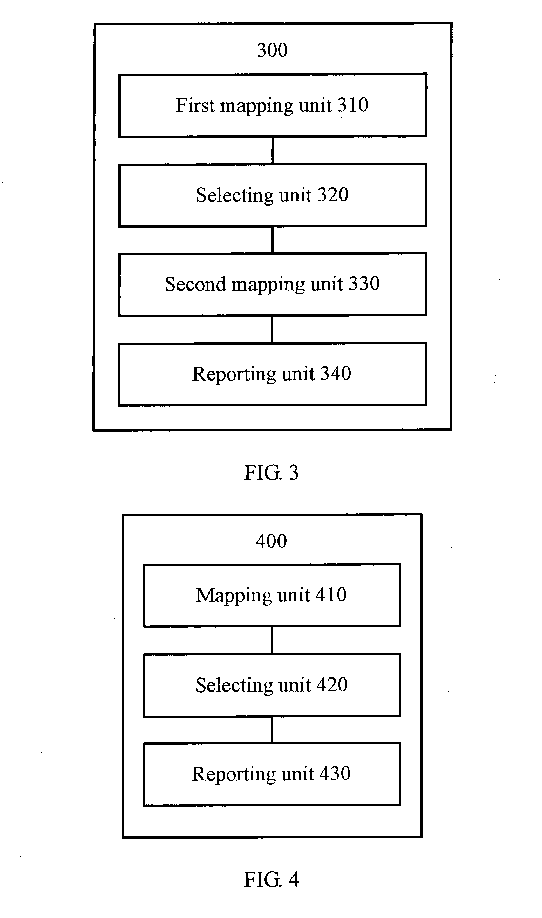

FIG. 3 is a schematic block diagram of an embodiment of a device 300 for reporting measurement data according to the present invention. The device 300 may be a mobile terminal device that executes the processes of the method 100. Therefore, to avoid repetition, no detailed description is provided herein again.

As shown in FIG. 3, the device 300 includes a first mapping unit 310, a selecting unit 320, a second mapping unit 330, and a reporting unit 340.

The first mapping unit 310 is configured to map each of measurement values of adjacent cells that meet a reporting criterion to a first reported value in a 6-bit reported value mode. The selecting unit 320 is configured to select, according to the first reported value, a cell allowed to be reported from the adjacent cells that meet the reporting criterion. The second mapping unit 330 is configured to map a measurement value of the cell allowed to be reported to a second reported value in a 3-bit reported value mode. The reporting unit 340 is configured to report the second reported value to a network.

According to an embodiment of the present invention, the selecting unit 320 selects the cell allowed to be reported according to a descending order of a ranking value.

According to another embodiment of the present invention, the selecting unit 320 obtains the ranking value by adding a corresponding offset to the first reported value, or obtains the ranking value by deducting a threshold value from the first reported value and adding a corresponding offset to the first reported value.

As such, in the embodiment of the present invention, the first reported values mapped in the 6-bit reported value mode may be used in ranking of the adjacent cells, and the second reported values mapped in the 3-bit reported value mode may be used in actual reporting of the adjacent cells, so as to selectively report the adjacent cells.

FIG. 4 is a schematic block diagram of an example of a device 400 for reporting measurement data according to the present invention. The device 400 may be a mobile terminal device that executes the processes of the method 200. Therefore, to avoid repetition, no detailed description is provided herein again.

As shown in FIG. 4, the device 400 includes a mapping unit 410, a selecting unit 420, and a reporting unit 430.

The mapping unit 410 is configured to map each of measurement values of adjacent cells to a reported value in a 3-bit reported value mode. The selecting unit 420 is configured to obtain a ranking value according to the reported value, and select, according to the ranking value, a cell allowed to be reported from the adjacent cells that meet a reporting criterion. The reporting unit 430 is configured to report the reported value of the cell allowed to be reported to a network.

According to an example of the present invention, the selecting unit 420 selects the cell allowed to be reported according to a descending order of the ranking value.

According to another example of the present invention, the selecting unit 420 multiplies the reported value by a factor to obtain a product, and obtains the ranking value by adding a respective offset to the product.

Alternatively, the selecting unit 420 multiplies the reported value by a factor to obtain a product, and obtains the ranking value by adding a threshold value and a respective offset to the product.

In this manner, according to the example of the present invention, when the cells that meet the reporting criterion among the adjacent cells that use multiple access technologies/modes exceed the allowed space in the measurement report, the terminal is enabled to rank all the cells according to the method provided by this solution and selectively report the measurement reports of the cells that use different access technologies/modes.

Persons of ordinary skill in the art may understand that, the units and the steps of algorithms according to the embodiments of the present invention may be implemented by electronic hardware, computer software, or a combination thereof. In order to illustrate the interchangeability of the hardware and the software, the compositions and steps of the embodiments are generally described according to functions in the above description. Whether these functions are executed as hardware or software depends upon the specific applications and design constraints of the technical solutions. Persons skilled in the art may use different methods for each specific application to implement the described functions.

Persons skilled in the art may clearly understand that, for easy and concise description, the specific working processes of the system, device, and units described above may refer to the corresponding processes in the method embodiment, and are not described herein again.

In the embodiments provided in this application, it should be understood that the system, device, and method may be implemented by other means. For example, the device embodiment described above is only exemplary. For example, the units are merely divided according to logical functions and can be divided in other manners in actual implementation. For example, multiple units or components can be combined or integrated into another system, or some features can be ignored or not performed. In addition, the displayed or discussed mutual coupling, direct coupling, or communication connection may be indirect coupling or communication connection through certain interfaces, devices, or units, and may be electrical, mechanical, or in other forms.

The units that are described as separate components may be or may not be physically separated, and the components displayed as units may be or may not be physical units. That is, the units or components may be located at one place or scattered on several network units. Some or all of the units may be selected according to actual needs to implement the solutions in the embodiments of the present invention.

In addition, all function units in each embodiment of the present invention may be integrated into a processing unit, or exist as independent physical units, or two or more units may be integrated into one unit. The integrated units may be implemented by using hardware, or by using the form of software function units.

If the integrated units are implemented through software function units, and are sold or used as independent products, the integrated units may be stored in a computer readable storage medium. Based on such understanding, the essence of the technical solutions in the present invention, or the part that contributes to the prior art, or all or a part of the technical solutions may be embodied in the form of a software product. This computer software product is stored in a storage medium, and includes several instructions that enable a computer device (which may be a personal computer, a server, or a network device) to execute all or some steps of the method provided in each of the above embodiments of the present invention. The foregoing storage medium can be a medium capable of storing program codes, including a USB disk, mobile disk, read-only memory (ROM, Read-Only Memory), random access memory (RAM, Random Access Memory), magnetic disk, or compact disk.

In conclusion, the above are merely exemplary embodiments of the present invention. However, the present invention is not limited thereto but defined by the appended claims.

## Claims

1. A method for reporting measurement data, **characterized by** comprising:
mapping (S110) each of measurement values of adjacent cells that meet a reporting criterion to a first reported value in a 6-bit reported value mode;
selecting (S120), according to the first reported value, a cell allowed to be reported from the adjacent cells that meet the reporting criterion;
mapping (S130) a measurement value of the cell allowed to be reported to a second reported value in a 3-bit reported value mode; and
reporting (S140) the second reported value to a network.

2. The method according to claim 1, wherein the step of selecting (S120), according to the first reported value, the cell allowed to be reported from the adjacent cells that meet the reporting criterion comprises: obtaining (S220) a ranking value according to the first reported value, and selecting the cell allowed to be reported according to a descending order of the ranking value.

3. The method according to claim 2, wherein the step of obtaining (S220) the ranking value according to the first reported value comprises:
obtaining the ranking value by adding a corresponding offset to the first reported value; or
obtaining the ranking value by deducting a threshold value from the first reported value and adding a corresponding offset to the first reported value.

4. The method according to any one of claims 1 to 3, wherein the step of mapping (S130) the measurement value of the cell allowed to be reported to the second reported value in the 3-bit reported value mode comprises: mapping a measurement value of a cell of an evolved universal terrestrial radio access network in the cell allowed to be reported to the second reported value in the 3-bit reported value mode.

5. A device for reporting measurement data, **characterized by** comprising:
a first mapping unit (310), configured to map each of measurement values of adjacent cells that meet a reporting criterion to a first reported value in a 6-bit reported value mode;
a selecting unit (320), configured to select, according to the first reported value, a cell allowed to be reported from the adjacent cells that meet the reporting criterion;
a second mapping unit (330), configured to map a measurement value of the cell allowed to be reported to a second reported value in a 3-bit reported value mode; and
a reporting unit (340), configured to report the second reported value to a network.

6. The device according to claim 5, wherein the selecting unit (320) is configured to obtain a ranking value according to the first reported value, and select the cell allowed to be reported according to a descending order of the ranking value.

7. The device according to claim 6, wherein the selecting unit (320) is configured to obtain the ranking value by adding a corresponding offset to the first reported value, or obtain the ranking value by deducting a threshold value from the first reported value and adding a corresponding offset to the first reported value.

8. The device according to any one of claims 5 to 7, wherein the second mapping unit (330) is configured to map a measurement value of a cell of an evolved universal terrestrial radio access network in the cell allowed to be reported to the second reported value in the 3-bit reported value mode.

## Patentansprüche

1. Verfahren zum Berichten von Messdaten, **dadurch gekennzeichnet, dass** es Folgendes umfasst:
Abbilden (S110) jedes der Messwerte von benachbarten Zellen, die ein Beuchtskuterium erfüllen, auf einen ersten berichteten Wert in einem 6-Bit-Modus für berichtete Werte;
Auswählen (S120), gemäß dem ersten berichteten Wert, einer Zelle, die zu berichten erlaubt ist, aus den benachbarten Zellen, die das Berichtskuterium erfüllen;
Abbilden (S130) eines Messwerts der Zelle, die zu berichten erlaubt ist, auf einen zweiten berichteten Wert in einem 3-Bit-Modus für berichtete Werte; und
Berichten (S140) des zweiten berichteten Werts an ein Netz.

2. Verfahren nach Anspruch 1, wobei der Schritt des Auswählens (S120), gemäß dem ersten berichteten Wert, der Zelle, die zu berichten erlaubt ist, aus den benachbarten Zellen, die das Berichtskriterium erfüllen, Folgendes umfasst: Erhalten (S220) eines Rangfolgewerts gemäß dem ersten berichteten Wert und Auswählen der Zelle, die zu berichten erlaubt ist, gemäß einer absteigenden Reihenfolge des Rangfolgewerts.

3. Verfahren nach Anspruch 2, wobei der Schritt des Erhaltens (S220) des Rangfolgewerts gemäß dem ersten berichteten Wert Folgendes umfasst:
Erhalten des Rangfolgewerts durch Addieren eines entsprechenden Versatzes zu dem ersten berichteten Wert; oder
Erhalten des Rangfolgewerts durch Subtrahieren eines Schwellenwerts von dem ersten berichteten Wert und Addieren eines entsprechenden Versatzes zu dem ersten berichteten Wert.

4. Verfahren nach einem der Ansprüche 1 bis 3, wobei der Schritt des Abbildens (S130) des Messwerts der Zelle, die zu berichten erlaubt ist, auf den zweiten berichteten Wert in dem 3-Bit-Modus für berichtete Werte Folgendes umfasst: Abbilden eines Messwerts einer Zelle eines entwickelten universellen terrestrischen Funkzugangsnetzes in der Zelle, die zu berichten erlaubt ist, auf den zweiten berichteten Wert in dem 3-Bit-Modus für berichtete Werte.

5. Vorrichtung zum Berichten von Messdaten, **dadurch gekennzeichnet, dass** sie Folgendes umfasst:
eine erste Abbildungseinheit (310), die konfiguriert ist, jeden der Messwerte von benachbarten Zellen, die ein Berichtskriterium erfüllen, auf einen ersten berichteten Wert in einem 6-Bit-Modus für berichtete Werte abzubilden;
eine Auswahleinheit (320), die konfiguriert ist, gemäß dem ersten berichteten Wert,
eine Zelle, die zu berichten erlaubt ist, aus den benachbarten Zellen, die das Berichtskriterium erfüllen, auszuwählen;
eine zweite Abbildungseinheit (330), die konfiguriert ist, einen Messwert der Zelle,
die zu berichten erlaubt ist, auf einen zweiten berichteten Wert in einem 3-Bit-Modus für berichtete Werte abzubilden; und
eine Berichtseinheit (340), die konfiguriert ist, den zweiten berichteten Wert an ein Netz zu berichten.

6. Vorrichtung nach Anspruch 5, wobei die Auswahleinheit (320) konfiguriert ist, einen Rangfolgewert gemäß dem ersten berichteten Wert zu erhalten und die Zelle, die zu berichten erlaubt ist, gemäß einer absteigenden Reihenfolge des Rangfolgewerts auszuwählen.

7. Vorrichtung nach Anspruch 6, wobei die Auswahleinheit (320) konfiguriert ist, den Rangfolgewert durch Addieren eines entsprechenden Versatzes zu dem ersten berichteten Wert zu erhalten oder den Rangfolgewert durch Subtrahieren eines Schwellenwerts von dem ersten berichteten Wert und Addieren eines entsprechenden Versatzes zu dem ersten berichteten Wert zu erhalten.

8. Vorrichtung nach einem der Ansprüche 5 bis 7, wobei die zweite Abbildungseinheit (330) konfiguriert ist, einen Messwert einer Zelle eines entwickelten universellen terrestrischen Funkzugangsnetzes in der Zelle, die zu berichten erlaubt ist, auf den zweiten berichteten Wert in dem 3-Bit-Modus für berichtete Werte abzubilden.

## Revendications

1. Procédé permettant de rapporter des données de mesure, **caractérisé en ce qu'**il comprend :
le mappage (S110) de chacune des valeurs de mesure de cellules adjacentes qui satisfont à un critère de rapport sur une première valeur rapportée dans un mode de valeur rapportée sur 6 bits,
la sélection (120), en fonction de la première valeur rapportée, d'une cellule pouvant être rapportée à partir des cellules adjacentes qui satisfont au critère de rapport,
le mappage (S130) d'une valeur de mesure de la cellule pouvant être rapportée sur une seconde valeur rapportée dans un mode de valeur rapportée sur 3 bits, et
le rapport (S140) de la seconde valeur rapportée sur un réseau.

2. Procédé selon la revendication 1, dans lequel l'étape de sélection (120), en fonction de la première valeur rapportée, de la cellule pouvant être rapportée à partir des cellules adjacentes qui satisfont au critère de rapport comprend : la récupération (S220) d'une valeur de classement en fonction de la première valeur rapportée et la sélection de la cellule pouvant être rapportée en fonction de l'ordre descendant de la valeur de classement.

3. Procédé selon la revendication 2, dans lequel l'étape de récupération (S220) de la valeur de classement en fonction de la première valeur rapportée comprend :
la récupération de la valeur de classement en ajoutant un décalage correspondant à la première valeur rapportée, ou
la récupération de la valeur de classement en déduisant une valeur de seuil à partir de la première valeur rapportée et en ajoutant un décalage correspondant à la première valeur rapportée.

4. Procédé selon l'une quelconque des revendications 1 à 3, dans lequel l'étape de mappage (S130) de la valeur de mesure de la cellule pouvant être rapportée sur la seconde valeur rapportée dans le mode de valeur rapportée sur 3 bits comprend : le mappage d'une valeur de mesure d'une cellule d'un réseau d'accès radio terrestre universel évolué dans la cellule pouvant être rapportée sur la seconde valeur rapportée dans le mode de valeur rapportée sur 3 bits

5. Dispositif permettant de rapporter des données de mesure, **caractérisé en ce qu'**il comprend :
une première unité de mappage (310) configurée pour mapper chacune des valeurs de mesure de cellules adjacentes qui satisfont à un critère de rapport sur une première valeur rapportée dans un mode de valeur rapportée sur 6 bits,
une unité de sélection (320) configurée pour sélectionner, en fonction de la première valeur rapportée, une cellule pouvant être rapportée à partir des cellules adjacentes qui satisfont au critère de rapport,
une seconde unité de mappage (330) configurée pour mapper une valeur de mesure de la cellule pouvant être rapportée sur une seconde valeur rapportée dans un mode de valeur rapportée sur 3 bits, et
une unité de rapport (340) configurée pour rapporter la seconde valeur rapportée sur un réseau.

6. Dispositif selon la revendication 5, dans lequel l'unité de sélection (320) est configurée pour récupérer une valeur de classement en fonction de la première valeur rapportée et pour sélectionner la cellule pouvant être rapportée en fonction de l'ordre descendant de la valeur de classement.

7. Dispositif selon la revendication 6, dans lequel l'unité de sélection (320) est configurée pour récupérer la valeur de classement en ajoutant un décalage correspondant à la première valeur rapportée, ou pour récupérer la valeur de classement en déduisant la valeur de seuil à partir de la première valeur rapportée et en ajoutant un décalage correspondant à la première valeur rapportée.

8. Dispositif selon l'une quelconque des revendications 5 à 7, dans lequel la seconde unité de mappage (330) est configurée pour mapper une valeur de mesure d'une cellule appartenant à un réseau d'accès radio terrestre universel évolué dans la cellule pouvant être rapportée sur la seconde valeur rapportée dans le mode de valeur rapportée sur 3 bits.
